(19) Europäisches Patentamt
European Patent Office
Office européen des brevets

(11) **EP 4 202 544 B1**

(12) **FASCICULE DE BREVET EUROPEEN**

(45) Date de publication et mention
de la délivrance du brevet:
**22.05.2024 Bulletin 2024/21**

(21) Numéro de dépôt: **22216660.5**

(22) Date de dépôt: **23.12.2022**

(51) Classification Internationale des Brevets (IPC):
**G03B 13/06** *(2021.01)* **G02B 23/14** *(2006.01)*

(52) Classification Coopérative des Brevets (CPC):
**G03B 13/06; G02B 23/105; G02B 23/14;
G02B 27/0081**

(54) **VISEUR DUAL POUR DISPOSITIF D'OBSERVATION**

DOPPELVISIER FÜR BEOBACHTUNGSVORRICHTUNG

DUAL SIGHT FOR A VIEWING DEVICE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **26.12.2021 FR 2114531**

(43) Date de publication de la demande:
**28.06.2023 Bulletin 2023/26**

(73) Titulaire: **Commissariat à l'énergie atomique
et aux énergies alternatives
75015 Paris (FR)**

(72) Inventeurs:
• **JOLY, Pierre**
  **38054 GRENOBLE Cedex 9 (FR)**
• **CHARRIERE, Simon**
  **38054 GRENOBLE Cedex 9 (FR)**

(74) Mandataire: **INNOV-GROUP
310, avenue Berthelot
69372 Lyon Cedex 08 (FR)**

(56) Documents cités:
FR-A1- 2 989 791     US-A- 5 099 265
US-A1- 2003 123 114     US-A1- 2020 259 985

**Description**

**DOMAINE TECHNIQUE**

Le domaine technique de l'invention est un viseur, conçu pour équiper des dispositifs de formation d'image, par exemple un appareil d'enregistrement d'image, ou des dispositifs de type jumelles ou longues-vues. Le viseur peut être appliqué à des dispositifs spécifiques, par exemple un dispositif d'imagerie médicale ou une arme.

**ARTANTERIEUR**

Les appareils photographiques comportent généralement des viseurs, permettant à un utilisateur de visualiser le champ d'observation de l'appareil.

Il peut s'agir d'un viseur optique, qui forme une image à partir de rayons lumineux issus de la scène observée, et s'étant propagés à travers l'objectif de l'appareil. Les rayons lumineux dirigés dans le viseur proviennent directement de la scène observée. Ils peuvent être réfléchis par un séparateur disposé entre l'objectif et le capteur d'image de l'appareil photographique. Il s'agit d'un viseur optique, car conçu à partir d'éléments optiques (réflecteurs, dioptres). Certains viseurs optiques utilisent un objectif dédié, différent de l'objectif relié au capteur de l'appareil photographique. L'image de la scène, produite par ce type de viseur, est affectée d'une parallaxe par rapport à l'image formée sur le capteur d'image. Mais cette parallaxe est généralement négligeable, sauf lorsque la scène observée est très proche. Un exemple de viseur optique est présenté par le document US 2003/123114 A1.

Un autre type de viseur est le viseur électronique, selon lequel le viseur utilise un écran, affichant une image représentative de l'image formée sur le capteur d'image de l'appareil photographique. Tandis que le viseur optique permet la visualisation de la scène observée, le viseur électronique permet de voir l'image potentiellement enregistrée par le capteur d'image. Cela peut permettre à l'utilisateur de régler l'appareil photographique et de visualiser l'effet des réglages directement sur l'image produite par le viseur. Les réglages peuvent concerner par exemple la gestion du cadrage, la profondeur de champ, ou la balance des blancs. Généralement, un appareil photographique comportant un viseur optique comporte un écran, intégré au boîtier de l'appareil. L'utilisateur doit alors alterner entre la vision à travers le viseur optique et la vision de l'écran. Il faut donc mémoriser l'une des deux images afin d'effectuer la comparaison avec l'autre image.

Lorsque l'appareil photographique ne comporte qu'un viseur électronique, l'utilisateur doit retirer l'oeil du viseur pour observer la scène qu'il souhaite photographier.

Certains appareils photographiques permettent, dans un même viseur, une commutation entre l'affichage soit de l'image du viseur optique, représentative de la scène observée, soit de l'image du viseur électronique, représentative de l'image formée sur le capteur d'image de l'appareil photographique. Une telle commutation ne permet pas un affichage simultané des images produites par les deux types de viseur. De ce fait, la comparaison entre les deux images est fastidieuse.

Certains viseurs ont été conçus, combinant un viseur optique et un viseur électronique. Dans ce type de viseur, l'image produite par le viseur électronique apparaît dans un cadre, sous la forme d'une vignette superposée sur une partie de l'image directe, produite par le viseur optique. La superposition masque une partie de l'image directe. Par ailleurs, l'image du viseur électronique est affichée sous la forme d'une vignette, dont les dimensions sont réduites par rapport à l'image du viseur optique. Cela ne permet pas d'effectuer une bonne comparaison entre les deux images.

L'invention décrite ci-après améliore les possibilités de comparaison de deux images, correspondant à une même scène, en impliquant un déplacement minimal de l'oeil, ce dernier étant toujours appliqué contre le viseur. Une application particulière concerne la photographie, l'invention améliorant les possibilités de comparaison entre l'image de la scène observée et l'image perçue par le capteur d'image. D'autres applications possibles sont décrites à la fin de la description, la finalité étant de faciliter la comparaison de deux images différentes.

**EXPOSE DE L'INVENTION**

Un premier objet de l'invention est un viseur, destiné à être présenté face à un oeil d'un utilisateur d'un dispositif d'observation, le dispositif d'observation comportant un objectif d'observation, destiné à former une image d'une scène observée, le viseur comportant :

- un moyen de formation d'une première image, représentative de la scène observée ;
- un premier système optique, couplé au moyen de formation de la première image, et agencé pour propager la première image vers une première pupille de sortie, autour d'un premier axe optique, les rayons lumineux formant la première image atteignant la première pupille de sortie en se propageant autour du premier axe optique ;

le viseur étant caractérisé en ce qu'il comporte :

- un écran secondaire, émettant une deuxième image, différente de la première image ;
- un deuxième système optique, s'étendant entre l'écran et une deuxième pupille de sortie, autour d'un deuxième axe optique, incliné par rapport au premier axe optique, le deuxième système optique étant configuré pour propager la deuxième image vers la deuxième pupille de sortie, les rayons lumineux formant la deuxième image atteignant la deuxième pupille de sortie en se propageant autour du deuxième axe optique;

Le viseur peut être tel que :

- la première pupille de sortie et la deuxième pupille de sortie sont tangentes à une même surface sphérique, dont le diamètre est compris entre 1.5 cm et 3 cm, de façon que le diamètre de la surface sphérique correspondant au diamètre oculaire ;
- le premier axe optique et le deuxième axe optique convergent, vers un point de convergence, correspondant au centre de ladite surface sphérique, de façon que le point de convergence soit situé dans l'oeil de l'utilisateur de telle sorte l'utilisateur, puisse visualiser

  • la première image lorsque l'oeil est orienté selon le premier axe optique;
  • la deuxième image lorsque l'oeil est orienté selon le deuxième axe optique.

De préférence, le premier axe optique et le deuxième axe optique sont coplanaires. De préférence, le premier axe optique et le deuxième axe optique s'étendent dans un plan vertical ou horizontal.
Selon un mode de réalisation,

- la première image et la deuxième image vues respectivement au niveau de la première et de la deuxième pupille de sortie, s'étendent :

  • autour d'un axe longitudinal, selon une largeur;
  • parallèlement à un axe latéral, selon une hauteur ;

- le deuxième axe et le premier axe s'étendent dans un plan parallèle à l'axe latéral (Y), de façon que la première image et la deuxième image sont juxtaposées en étant alignées l'une par rapport à l'autre parallèlement à l'axe latéral ;
- ou le deuxième axe et le premier axe s'étendent dans un plan parallèle à l'axe longitudinal de façon que la première image et la deuxième image sont juxtaposées en étant alignées l'une par rapport à l'autre parallèlement à l'axe longitudinal.

De préférence, le premier axe optique et le deuxième axe optique sont inclinés l'un par rapport à l'autre selon un angle d'inclinaison inférieur à 40°.
Selon un mode de réalisation,

- l'objectif d'observation forme l'image de la scène observée autour d'un axe optique d'observation ;
- le premier axe optique est parallèle à l'axe optique d'observation.

Selon un mode de réalisation, dit de prise d'images :

- le dispositif d'observation est un appareil de prise d'images, comportant un capteur d'image, le capteur d'image étant configuré pour acquérir l'image de la scène observée, formée par l'objectif d'observation;
- l'écran secondaire est relié au capteur d'image, de façon que la deuxième image est formée à partir de l'image acquise par le capteur d'image.

Selon une possibilité,

- le moyen de formation de la première image est un séparateur, agencé pour être disposé entre l'objectif d'observation et le capteur d'image, le séparateur étant orienté de façon à renvoyer l'image de la scène observée, focalisée par l'objectif, vers le premier système optique ;
- le premier système optique s'étend à partir du séparateur.

Selon une possibilité,

- le moyen de formation de la première image est un objectif auxiliaire, différent de l'objectif d'observation, destiné à former une image de la scène observée;
- le premier système optique s'étend à partir de l'objectif auxiliaire.

L'objectif auxiliaire peut avoir un axe optique parallèle à l'axe optique d'observation.

Selon une possibilité,

- le moyen de formation de la première image est un écran auxiliaire, destiné à présenter une image de la scène observée ;
- le premier système optique s'étend à partir de l'écran auxiliaire.

Selon une possibilité, l'appareil de prise d'images comporte une unité de commande du capteur d'image. Le viseur comporte :

- un écran d'affichage, relié à l'unité de commande et configuré pour afficher une troisième image;
- un troisième système optique, configuré pour propager la troisième image vers le premier système optique.

Le premier système optique peut s'étendre jusqu'à un premier dioptre de sortie, le premier dioptre de sortie étant positionné à une distance supérieure ou égale à 15 mm de la première pupille de sortie. Le deuxième système optique peut s'étendre jusqu'à un deuxième dioptre de sortie, le deuxième dioptre de sortie étant positionné à une distance supérieure ou égale à 15 mm de la deuxième pupille de sortie.

Selon un mode d'observation, modulaire,

- le dispositif d'observation est grandissant, le premier système optique étant confondu avec l'objectif d'observation;
- le capteur d'image est disposé sur un dispositif annexe, séparé du dispositif d'observation ;
- l'écran secondaire est configuré pour afficher une image acquise par le capteur d'image, éventuellement après application d'une opération de traitement d'image.

Un deuxième objet de l'invention est un dispositif d'observation, comportant un objectif d'observation, destiné à former une image d'une scène observée, autour d'un axe optique d'observation, le dispositif d'observation comportant un viseur selon le premier objet de l'invention.

Le dispositif d'observation peut être un appareil photographique comportant un capteur d'image. Le capteur d'image est configuré pour acquérir l'image de la scène observée, formée par l'objectif d'observation. Le dispositif d'observation comporte un viseur selon le mode de réalisation de prise d'images décrit en lien avec le premier objet de l'invention.

Le dispositif d'observation peut être grandissant, le premier système optique étant confondu avec l'objectif d'observation, le dispositif d'observation comportant un viseur selon le mode de réalisation modulaire décrit en lien avec le premier objet de l'invention.

L'invention sera mieux comprise à la lecture de l'exposé des exemples de réalisation présentés, dans la suite de la description, en lien avec les figures listées ci-dessous.

## FIGURES

La figure 1A schématise l'oeil d'un utilisateur du viseur.
La figure 1B montre un agencement possible de deux images affichées par le viseur.
La figure 1C montre un autre agencement possible de deux images affichées par le viseur.
La figure 1D illustre des paramètres permettant un dimensionnement du viseur.
La figure 2A montre un premier exemple de premier système optique.
La figure 2B montre un deuxième exemple de premier système optique.
La figure 2C montre un troisième exemple de premier système optique.
La figure 3 montre un exemple de deuxième système optique.
La figue 4A illustre un mode de réalisation dans lequel la première image est une image augmentée, à l'aide d'informations portées par une troisième image, transportée par un troisième système optique.
La figure 4B représente une configuration d'images formées par le viseur décrit en lien avec la figure 4A.
La figure 5 illustre un mode de réalisation dans lequel la deuxième image est une image augmentée, à l'aide d'informations portées par une troisième image, transportée par un troisième système optique.

La figure 6 montre les encombrements respectifs de chaque système optique comportant les axes optiques de chaque système optique.

Les figures 7A, 7B et 7C sont des schémas du premier système optique, du deuxième système optique et du troisième système optique, respectivement.

La figure 8 schématise un mode de réalisation dans lequel le dispositif d'observation est une lunette, formant la première image, et dans lequel la deuxième image est acquise par un dispositif annexe, pouvant être placé à distance du dispositif d'observation.

**EXPOSE DE MODES DE REALISATION PARTICULIERS**

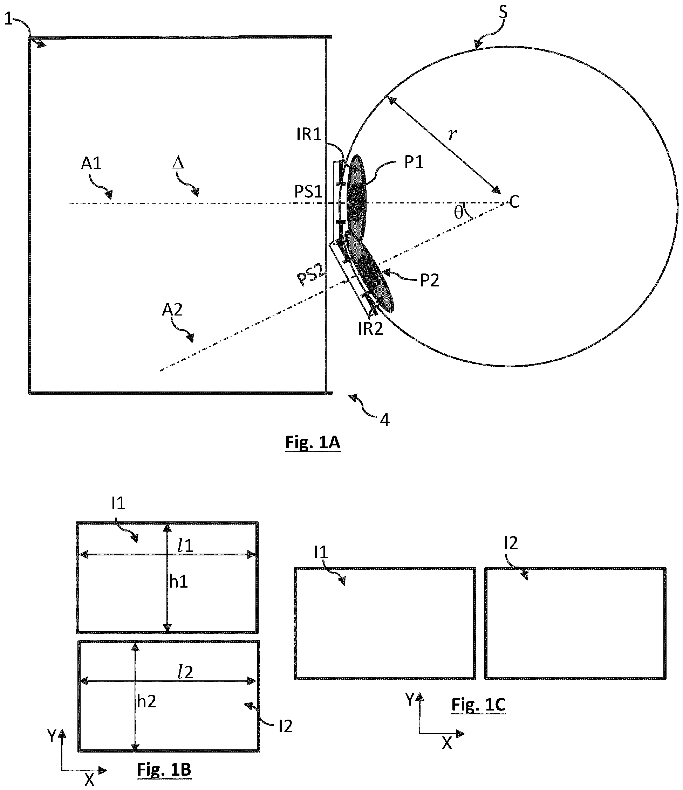

La figure 1A schématise un oeil E d'un utilisateur disposé dans une position d'utilisation d'un viseur 1 d'un dispositif d'observation. Dans cet exemple, le dispositif d'observation est un appareil photographique. Alternativement, de façon non limitative, le dispositif peut être une caméra, une lunette d'observation de type longue-vue ou jumelles. Il peut également s'agir d'un dispositif d'imagerie médicale, par exemple une caméra destinée à l'observation simultanée d'images réelle d'un tissu biologique et d'images de fluorescence du tissu biologique. L'invention peut également s'appliquer à un microscope, en permettant une observation simultanée d'images avec des grandissements différents.

L'invention est basée sur le fait que sous l'effet d'une simple rotation, l'oeil peut visualiser successivement plusieurs images juxtaposées, l'utilisateur restant immobile face au viseur. Ainsi, le viseur est configuré pour projeter simultanément :

- une première image !1, selon un premier axe optique A1 ;
- une deuxième image 12, différente de la première image, selon un deuxième axe optique A2. Par différente de la première image, on entend que l'image I2 est une image séparée de la première image. La première et la deuxième image peuvent représenter une même scène observée, acquises selon des modalités différentes.

Un tel viseur est dual, car il permet d'observer simultanément deux images juxtaposées.

Le viseur est configuré pour définir une première pupille de sortie PS1 et une deuxième pupille de sortie PS2, s'étendant respectivement autour du premier axe optique A1 et du deuxième axe optique A2.

Chaque pupille de sortie définit une région dans laquelle l'image est complète et sans vignettage lorsque l'oeil y est placé.

La première pupille de sortie et la deuxième pupille de sortie sont tangentes à une même surface sphérique S que l'on peut assimiler à la surface externe d'un oeil. Le diamètre de la surface sphérique S correspond au diamètre de l'oeil, soit environ 25 mm, et de façon plus générale compris entre 15 mm et 30 mm. Sur la figure 1A, on a représenté le rayon oculaire r. Les deux pupilles de sortie sont placées de façon à ce que l'oeil, par une simple rotation, puisse être positionné successivement face à la première pupille de sortie, pour observer la première image, et face à la deuxième pupille de sortie, pour observer la deuxième image. De préférence, chacune des pupilles a une dimension juste nécessaire pour assurer cette fonction. Cela permet notamment de rendre le viseur plus compact. Par conséquent, de préférence, aucune des pupilles n'est comprise dans l'autre.

Le premier axe optique A1 et le deuxième axe optique A2 sont sécants. Ils convergent en un point de convergence C formant le centre de la surface sphérique S. Ainsi, lorsque l'utilisateur occupe la position d'utilisation du viseur, le point de convergence C est situé à l'intérieur de l'oeil. Avantageusement, le point de convergence C correspond au centre de rotation de l'oeil, ou dans une zone centrale de l'oeil de l'utilisateur. Par zone centrale, on entend une zone s'étendant à moins de 5 mm du centre de rotation de l'oeil. Le recours à deux axes optiques sécants permet d'afficher deux images différentes, sans superposition de l'une sur l'autre. Les images I1 et I2 sont de préférence suffisamment rapprochées pour faciliter leur comparaison. L'invention permet d'éviter que les deux images soient superposées afin d'éviter un effet de masquage d'une image par l'autre image.

La position d'utilisation du viseur est ainsi définie par le point de convergence des deux axes optiques. Elle correspond à la position selon laquelle l'oeil E peut observer séquentiellement les deux images, par une simple rotation.

Ainsi, lorsqu'il occupe la position d'utilisation, par une simple rotation de son oeil, l'utilisateur visualise la première image !1, ou la deuxième image I2, en étant disposé respectivement face à la première pupille de sortie PS1 ou face à la deuxième pupille de sortie PS2. Compte tenu de la disposition des pupilles de sortie, l'utilisateur peut observer successivement la première image et la deuxième image sans déplacement de l'oeil E par rapport au viseur, mise à part une simple rotation. Sur la figure 1A, on a représenté, l'iris IR1, IR2 et la pupille P1, P2 respectivement selon une position centrée autour du premier axe optique A1, face à la première pupille de sortie PS1, et selon une position centrée autour du deuxième axe optique A2, face à la deuxième pupille de sortie PS2. Lorsque le viseur est utilisé, l'oeil est disposé dans la position d'utilisation, la pupille de l'oeil étant disposée à 25 mm, à une tolérance près, par exemple $\pm$ 5 mm, du point de convergence des deux axes optiques.

Le premier axe optique A1 et le deuxième axe optique A2 sont inclinés l'un par rapport à l'autre selon un angle d'inclinaison θ. Dans cet exemple, le premier axe optique et le deuxième axe optique sont coplanaires et appartiennent à un même plan vertical. L'angle d'inclinaison θ correspond au décalage angulaire de la première pupille de sortie et de la deuxième pupille de sortie.

D'une façon plus générale, chaque image projetée par le viseur, sur l'oeil, s'étend, parallèlement à un axe longitudinal X, selon une largeur et parallèlement à un axe latéral Y, selon une hauteur. La première image !1 s'étend selon une largeur *l*1 et une hauteur h1. La deuxième image I2 s'étend selon une largeur *l*2 et une hauteur h2. Il est préférable que la première et la deuxième image soient alignées soit selon l'axe latéral Y, ce qui est représenté sur la figure 1B, soit selon l'axe longitudinal X, comme représenté sur la figure 1C. Les images I1 et I2 ont de préférence la même taille, ou sensiblement la même taille. Par sensiblement la même taille, on entend la même largeur ou la même hauteur à 10% ou 20% près. Le fait que les images soient de même taille facilite leur comparaison.

La configuration représentée sur la figure 1B est préférée, en particulier lorsque les images acquises sont de format « paysage », c'est-à-dire plus longue que haute, ce qui est le cas le plus fréquent. Une telle configuration minimise le déplacement angulaire de l'oeil pour observer successivement chaque image.

L'axe central Δ correspond à l'orientation de l'oeil lorsque l'utilisateur regarde droit devant lui. Dans la configuration de la figure 1B, il est préférable que le premier axe optique A1 soit confondu avec l'axe central de l'oeil et que le deuxième axe optique A2 soit tel que la deuxième image soit affichée en dessous de la première image. De préférence, le premier axe optique et le deuxième axe optique sont coplanaires. De préférence, le plan comportant les premiers et deuxième axe optiques est vertical. Dans ce plan, le deuxième axe optique est situé en-dessous du premier axe optique. Un tel agencement des images limite la fatigue de l'oeil. En effet, les muscles oculaires sont plus sollicités lorsque l'oeil effectue une rotation en dessus de l'axe central. Il est donc préférable de limiter les rotations au-dessus de cet axe.

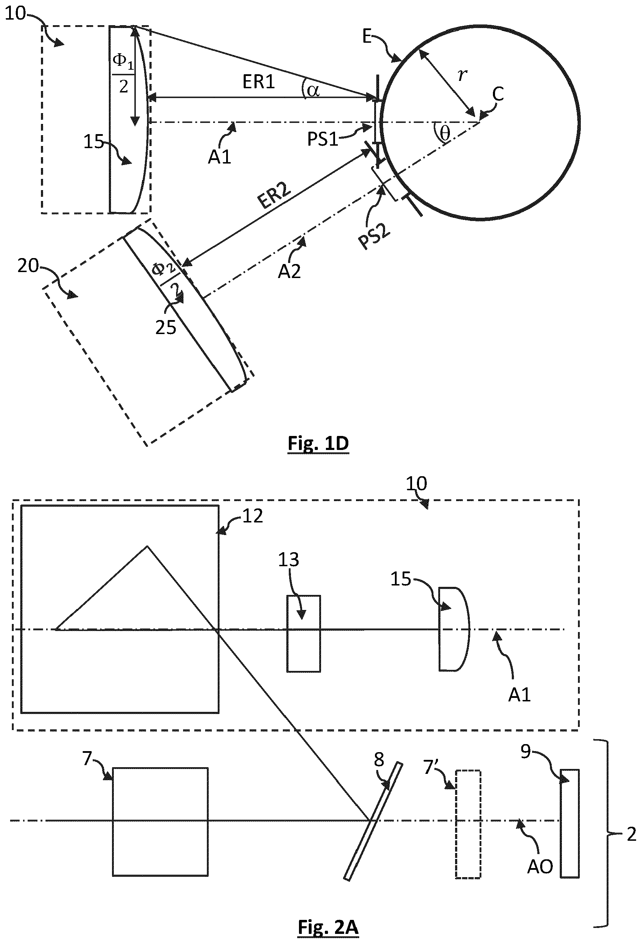

La figure 1D schématise:

- un premier système optique 10, configuré pour propager la première image I1 jusqu'à l'oeil E, la première image se propageant à travers la pupille de sortie PS1, selon le premier axe A1.
- un deuxième système optique 20, configuré pour propager la deuxième image 12 jusqu'à l'oeil, E, la deuxième image se propageant à travers la pupille de sortie PS2, selon le deuxième axe A2.

Le terme système optique désigne un ensemble d'éléments optiques, réfractifs et/ou réflectifs, permettant de modifier la trajectoire de rayons lumineux. Les premiers et deuxième systèmes optiques définissent chacun une voie optique.

Sur la figure 1D, on a également schématisé des grandeurs à considérer pour le dimensionnement de chaque système optique. Chaque système optique s'étend jusqu'à une extrémité de sortie, qui correspond à l'extrémité du système optique la plus proche de l'oeil. L'extrémité de sortie de chaque système optique est formée par un dioptre de sortie. Ainsi, l'extrémité de sortie du premier et du deuxième système optique est respectivement formée par un premier dioptre de sortie 15 et un deuxième dioptre de sortie 25. Il est préférable que les dioptres de sortie 15 et 25 aient un effet convergent, ce qui permet de gagner en compacité.

Une grandeur à considérer est le dégagement oculaire ER, usuellement désigné par le terme « Eye Relief ». Sur chaque système optique, le dégagement oculaire correspond à la distance entre le dioptre de sortie et l'oeil en position optimale d'utilisation. Il est usuel de prendre en compte un dégagement oculaire supérieur ou égal à 15 mm. Ainsi, le premier dioptre de sortie 15 et le deuxième dioptre de sortie 25 sont centrés sur le premier axe et sur le deuxième axe et sont respectivement disposés, à des distances ER1 et ER2 supérieures à 15 mm de la surface sphérique S à laquelle les pupilles de sortie PS1 et PS2 sont tangentes. Il est préférable de considérer ER1 = ER2 = ER.

Sur la figure 1D, on a représenté l'angle α délimitant le champ de vue selon l'axe latéral Y de chaque image. Le diamètre Φ1 du premier dioptre de sortie 15 peut être défini selon l'expression :

$$\frac{\Phi 1}{2} = \frac{\Phi_{PS1}}{2} + ER\tan(\alpha) \quad (1)$$

Le diamètre Φ2 du deuxième dioptre de sortie 25 est obtenu selon l'expression :

$$\frac{\Phi 2}{2} = \frac{\Phi_{PS2}}{2} + ER\tan(\alpha) \quad (1')$$

$\Phi_{PS1}$ et $\Phi_{PS2}$ sont respectivement le diamètre des pupilles de sortie PS1 et PS2.

Les valeurs typiques de $\phi 1$ et de $\phi 2$ peuvent par exemple être comprises entre 5 mm (en prenant en compte $\Phi_{PS1} = \Phi_{PS2} = 4$ mm ; ER1 = ER2 = 15 mm, $\alpha = 10°$) et 25 mm (en prenant en compte $\Phi_{PS1} = \Phi_{PS2} = 12$ mm ; ER1 = ER2 = 22 mm, $\alpha = 41°$).

De préférence, $\Phi_{PS1} = \Phi_{PS2}$, les valeurs de $\Phi_{PS1}$ et $\Phi_{PS1}$ étant typiquement comprises entre 2 mm et 18 mm.

L'angle de rotation de l'oeil $\theta$ correspond à l'angle parcouru par l'oeil pour passer d'une position centrée sur le premier axe optique A1 à une position centrée sur le deuxième axe optique A2 et réciproquement. L'angle de rotation $\theta$ peut être calculé selon l'expression :

$$\theta = 2Atan\left(\frac{\frac{\Phi}{2}}{ER + r}\right) \quad (2)$$

où r désigne le rayon oculaire et $\Phi = \Phi1 = \Phi2$

Le rayon oculaire r est considéré égal à 12.5 mm, ce qui correspond à un diamètre oculaire de 25 mm.

L'angle de rotation $\theta$ est de préférence inférieur à 40°, la valeur de 40° constituant une limite biologique pour l'oeil humain. En prenant en compte la valeur haute de 25 mm pour $\Phi$, obtenue en prenant en compte ER = 22 mm et $\Phi_{PS1} = \Phi_{PS2} = 12$ mm, et $\alpha = 41°$ on obtient $\theta = 72°$. Une telle valeur d'angle de rotation est excessive. Afin de limiter l'angle de rotation à 40°, le dispositif doit être dimensionné en prenant en compte les conditions suivantes :

- $\alpha$ compris entre 10° et 22 ;
- *ER* compris entre 15 mm et 25 mm ;
- $\Phi_{PS1}$ et $\Phi_{PS2}$ compris entre 4 et 18 mm.

La figure 2A schématise un mode de réalisation selon lequel le premier système optique 10 est configuré pour projeter une image formée à partir de rayons lumineux émis par une scène observée par l'objectif d'observation 7 du dispositif d'observation 2. Selon ce mode de réalisation, le dispositif d'observation comporte un objectif d'observation 7 couplé à un capteur d'image 9, par exemple un capteur CMOS. L'objectif d'observation 7 et le capteur d'image 9 sont centrés par rapport à un axe optique d'observation AO, qui constitue l'axe optique du dispositif d'observation 2. Le capteur d'image 9 définit un plan de détection, dans lequel une image d'observation de la scène observée est formée. L'axe optique d'observation AO est perpendiculaire au plan de détection.

D'une façon générale, le premier système optique 10 est configuré pour projeter une première image !1, formée par un moyen de formation d'image, vers l'oeil. Les rayons lumineux formant la première image atteignent l'oeil en se propageant autour du premier axe A1. La première image !1 est représentative de la scène observée. Elle peut être formée à partir de rayons lumineux incidents au capteur d'image 9. Ainsi, la première image !1 est indépendante de réglages du capteur d'image.

Dans le mode de réalisation représenté sur la figure 2A, le viseur 1 comporte un séparateur 8, par exemple une lame semi-réfléchissante ou une lame dichroïque, configurée pour réfléchir une partie des rayons s'étant propagés à travers l'objectif d'observation 7. Le séparateur 8 est disposé entre l'objectif d'observation 7 et le capteur d'image 9. Le séparateur agit en tant que moyen de formation d'image à l'égard du premier système optique 10. L'image réfléchie par le séparateur 8 est une première image !1, représentative de la scène observée. Le premier système optique 10 est agencé pour projeter la première image !1 sur l'oeil, selon le premier axe optique A1. De préférence le premier axe optique A1 est parallèle à l'axe optique d'observation AO.

Le premier système optique 10 comporte un prisme 12, typiquement de type pentaprisme, configuré pour orienter la propagation des rayons lumineux, formant la première image, parallèlement à l'axe optique d'observation AO, de façon que ces derniers atteignent l'oeil en se propageant selon l'axe A1 parallèle à l'axe optique d'observation AO. Le système optique 10 peut comporter un ou plusieurs dioptres de mise en forme 13 ainsi que le dioptre de sortie 15 précédemment décrit.

Selon ce mode de réalisation, le viseur 1 agit en tant que viseur passif, ou viseur direct : les rayons se propageant à travers le premier système optique proviennent de la scène observée, selon une configuration « reflex ». Selon ce mode de réalisation, le moyen de formation de la première image !1 est le séparateur 8 disposé transversalement à l'axe optique d'observation AO.

Le premier mode de réalisation convient à une application dans laquelle la première image, résultant du séparateur 8, est une image acquise dans une bande spectrale différente de l'image acquise par le capteur d'image 9. Par exemple, la première image est formée dans une bande spectrale de fluorescence tandis que l'image acquise par le capteur d'image est une image, dans tout le spectre visible, de la scène observée. Dans ce cas, le séparateur 8 peut être une lame dichroïque.

Le premier mode de réalisation convient à une application dans laquelle la première image et l'image acquise par le capteur d'image sont formées dans la même bande spectrale, mais avec des grandissements différents. Dans ce cas, le séparateur est une lame semi-réfléchissante. Un système optique auxiliaire 7' peut être disposé entre le séparateur 8 et le capteur d'image 9. Le capteur d'image 9 acquiert une image dont le grandissement est supérieur au grandissement de la première image. De façon alternative, le premier système optique 10 applique un grandissement supplémentaire à l'image réfléchie par le séparateur. Un tel mode de réalisation convient à une application en microscopie en permettant une observation de deux images d'une même scène avec des grandissements différents.

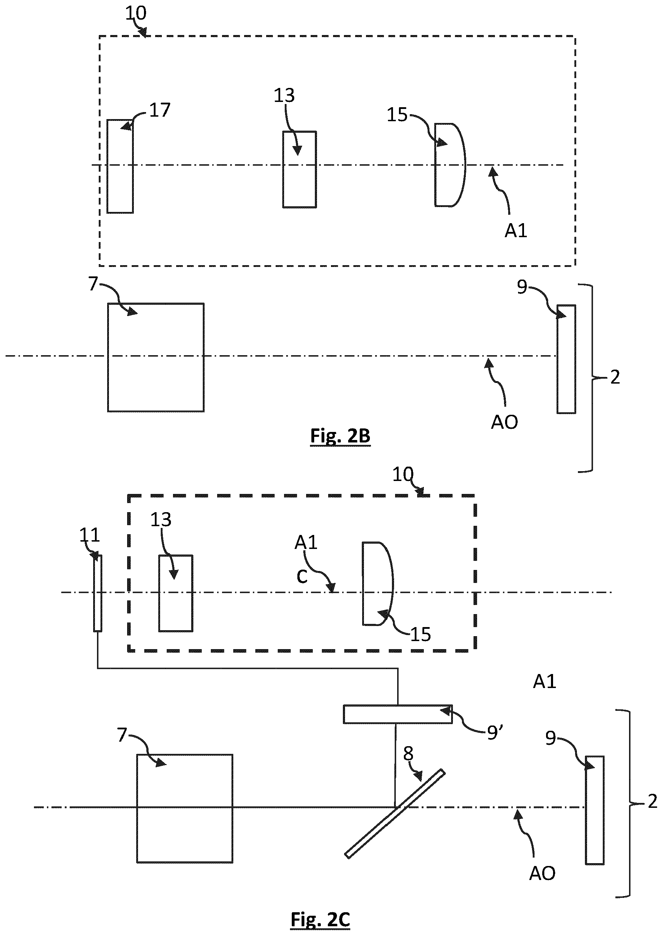

Selon un deuxième mode de réalisation, représenté sur la figure 2B, le viseur agit également en tant que viseur passif. Les rayons transportés par le premier système optique 10 proviennent de la scène observée. Le premier système optique peut comporter un objectif auxiliaire 17, différent de l'objectif principal 7, dont l'axe optique est parallèle avec l'axe optique d'observation AO. Le premier système optique 10 peut comporter une ou plusieurs lentilles de mise en forme 13. Selon ce mode de réalisation, le moyen de formation de la première image !1 est l'objectif auxiliaire 17. La distance entre le premier axe optique A1 et l'axe optique d'observation AO est minimisée afin de réduire la parallaxe.

Selon un troisième mode de réalisation, représenté sur la figure 2C, le séparateur 8 est relié à un capteur d'image auxiliaire 9'. Le capteur d'image auxiliaire 9' est relié à un écran auxiliaire 11, ce dernier agissant en tant qu'afficheur de la première image !1. Le système optique 10 est configuré pour projeter la première image !1 sur l'oeil, selon le premier axe A1, ce dernier étant de préférence parallèle à l'axe optique AO. Le système optique 10 comporte une ou plusieurs dioptres de mise en forme 13 ainsi que le dioptre de sortie 15.

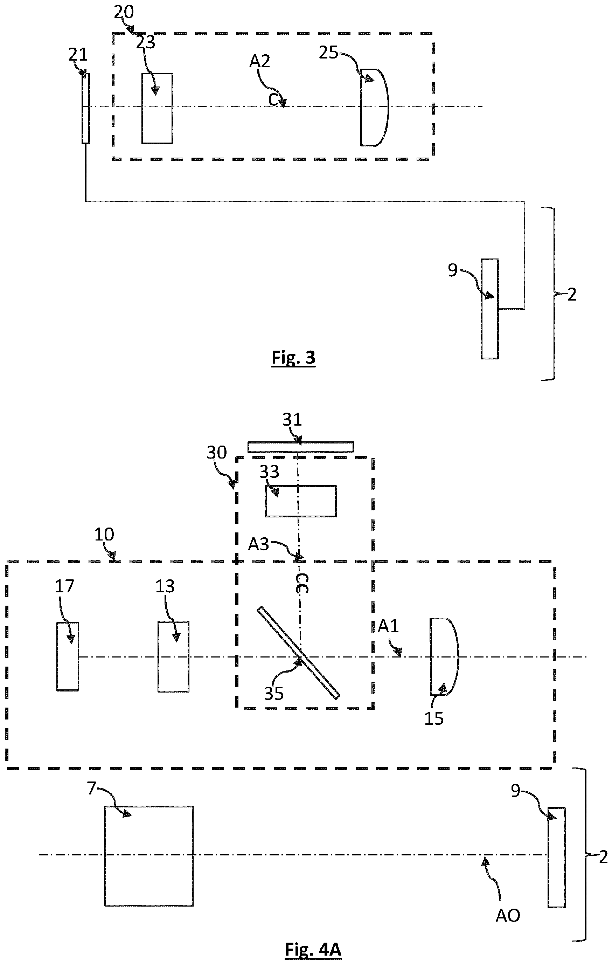

La figure 3 montre la deuxième voie optique, destinée à former et à projeter une deuxième image I2 à l'aide du deuxième système optique 20. La deuxième voie optique comporte un écran dit écran secondaire 21, relié au capteur d'image 9. L'écran secondaire affiche une deuxième image I2, qui correspond soit à l'image acquise par le capteur d'image 9, éventuellement après application d'opération de traitement d'image, soit à des informations concernant le système d'observation ou son environnement y compris des paramètres ou résultats du traitement d'image issu du capteur d'image 9, soit une combinaison des deux. Les informations sont par exemple stockées dans une unité de commande du dispositif d'observation, reliée au capteur d'image 9. Le deuxième système optique 20 transporte la deuxième image I2, affichée par l'écran secondaire 21, de façon que la deuxième image soit projetée sur l'oeil parallèlement au deuxième axe A2. La deuxième optique comporte un ou plusieurs dioptres 23, permettant une mise en forme de l'image, ainsi que le deuxième dioptre de sortie 25 préalablement décrit.

Lorsque la première image !1 est formée tel que décrit en lien avec l'une des figures 2A à 2C, et que la deuxième image I2 est formée comme décrit en lien avec la figure 3, l'utilisateur de l'appareil photographique 2 peut observer dans le viseur 1, deux images juxtaposées : la première image !1 est représentative de la scène observée, indépendamment des réglages du capteur d'image 9. La deuxième image I2 est représentative de l'image acquise par le capteur d'image 9, et d'éventuels traitements numériques appliqués à l'image. L'utilisateur peut ainsi comparer les deux images, qui ont la même taille, ce qui lui permet de visualiser l'effet de réglages du capteur d'image 9 ou de traitements numériques appliqués sur l'image acquise par le capteur d'image.

Selon une variante, représentée sur la figure 4A, compatible avec les configurations décrites en lien avec les figures 2A à 2C, le premier système optique est couplé à une troisième voie optique, permettant une superposition sur l'image de la première voie optique d'une troisième image I3. La troisième image comprend des informations concernant le système d'observations ou son environnement y compris des paramètres ou résultats du traitement d'image issu du capteur d'image 9. Les paramètres de réglage peuvent être , par exemple, la durée d'exposition, l'ouverture, la balance des blancs... Il peut également s'agir d'éléments visuels relatifs à l'image acquise par le capteur d'image 9, par exemple l'indication de zones surexposées ou sous-exposées. Il peut également s'agir d'informations contextuelles, par exemple la date ou l'heure ou le lieu. Les informations sont par exemple stockées dans une unité de commande du dispositif d'observation, reliée au capteur d'image 9.

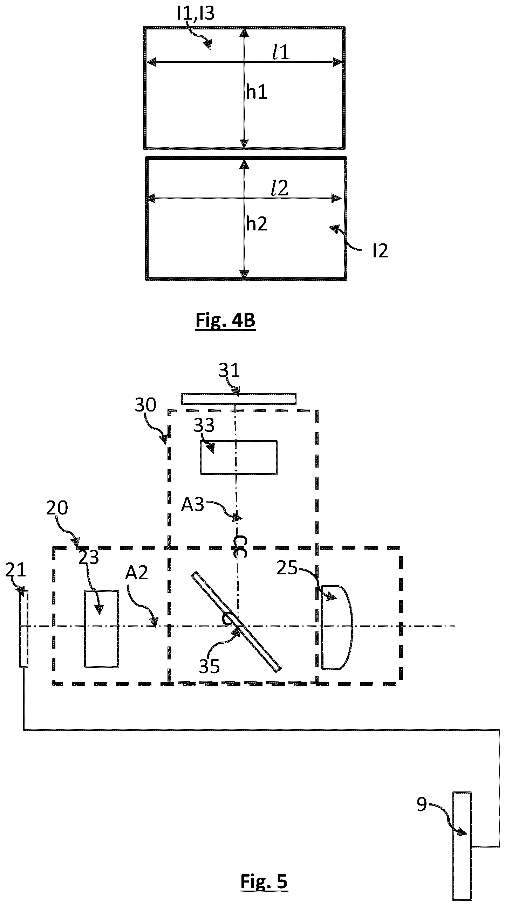

La troisième image est superposée sur la première image !1, selon les principes de la réalité augmentée. Le viseur comporte un écran d'affichage 31, configuré pour afficher la troisième image I3. La troisième image I3 est propagée par un troisième système optique 30 jusqu'à un combinateur 35, agencé pour propager la troisième image, jusqu'à l'oeil, parallèlement au premier axe A1. La troisième image I3 est ainsi projetée sur l'oeil en se superposant à la première image !1. Cf. figure 4B.

La troisième voie optique, schématisée sur la figure 4A, peut être combinée avec la configuration représentée sur les figures 2A à 2C, ou avec la deuxième voie optique, comme représenté sur la figure 5. Dans ce dernier cas, le viseur permet de projeter la troisième image I3 superposée à la deuxième image I2, selon les principes de la réalité augmentée.

Un aspect à prendre en compte est la focalisation des images projetées. Afin que l'utilisateur n'ait pas à accommoder sa vision, la première image I1 et la deuxième image I2, et éventuellement la troisième image I3, doivent être affichées dans la profondeur de champ de l'oeil. Par profondeur de champ de l'oeil, on entend la variation de distance pouvant être tolérée sans entraîner de manque significatif de netteté. Ceci se traduit par la contrainte suivante sur les systèmes optiques : les distances $d_1$, $d_2$ et $d_3$, définies respectivement entre les pupilles PS1, PS2 et PS3 (qui est égale à PS1 par construction selon la configuration de la figure 4A) et les images I1, I2 et I3 vues à travers leurs voies optiques respectives, exprimées en dioptries (1/m), ne doivent pas s'écarter de 0,25 dioptries l'une de l'autre. Soit :

$$\left|\frac{1}{d_1} - \frac{1}{d_2}\right| \le 0.25$$

$$\left|\frac{1}{d_2} - \frac{1}{d_3}\right| \le 0.25$$

$$\left|\frac{1}{d_1} - \frac{1}{d_3}\right| \le 0.25$$

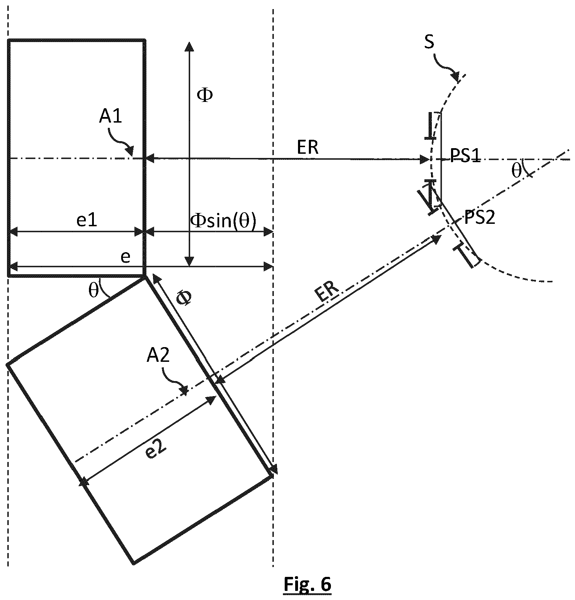

Le viseur est destiné à être intégré dans un dispositif d'observation 2, par exemple un appareil photographique ou une lunette. L'encombrement du viseur doit permettre une telle intégration. On suppose que les paramètres Eye Relief ER et le diamètre de chaque pupille de sortie sont identiques pour chaque voie optique. Le volume du viseur est limité par les dioptres de sortie 15 et 25, dont le diamètre $\Phi$ est défini dans (1). Sur la figure 6, on a représenté un agencement, selon lequel le premier et le deuxième système optique s'étendent, dans un plan passant par chaque axe optique, dans deux parallélépipèdes respectifs au contact l'un de l'autre, d'épaisseurs respectives e1 et e2. Les épaisseurs e1 et e2 sont reliées par l'expression :

$$e1 = e2\cos(\theta) \quad (4)$$

L'épaisseur totale e est telle que $e = e1 + \phi\sin(\theta)$.

Le dimensionnement du viseur peut être réalisé en prenant en compte les paramètres suivants, le premier système optique étant tel que décrit en lien avec la figure 2B.

Pour chaque système optique :

- ER = 18 mm ;
- $\Phi_{PS1} = \Phi_{PS2}$ = 12 mm
- Champ angulaire : 21° $\times$ 17 ° (format paysage) ;
- Distance de projection de l'image virtuelle : 4000.
- Grossissement du premier système optique : 1
- Dimension de l'écran secondaire 21 et de l'écran 31 d'affichage des paramètres :12,1 mm $\times$ 9,7 mm.

Compte tenu de ces valeurs, les inventeurs considèrent que l'épaisseur e1 peut être comprise entre 4 mm et 55 mm, l'épaisseur e2 peut être comprise entre 4 et 70 mm, et l'épaisseur totale e peut être comprise entre 7 et 85 mm, ce qui est intégrable dans un dispositif de type appareil photographique.

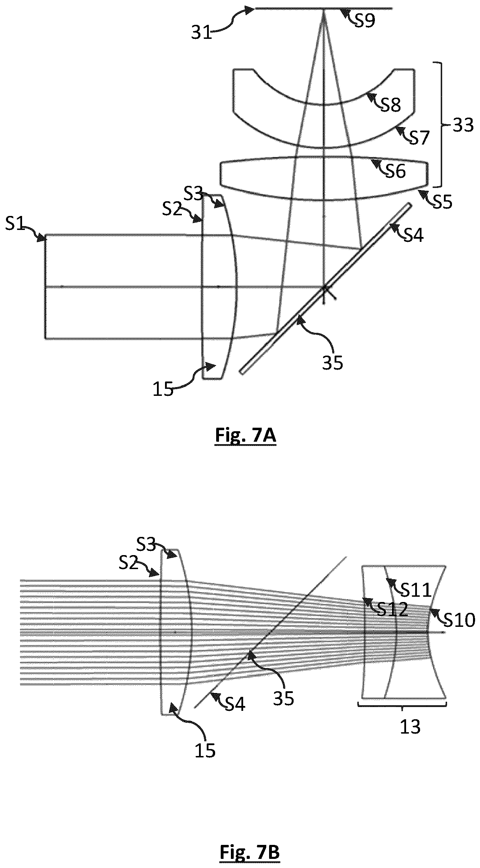

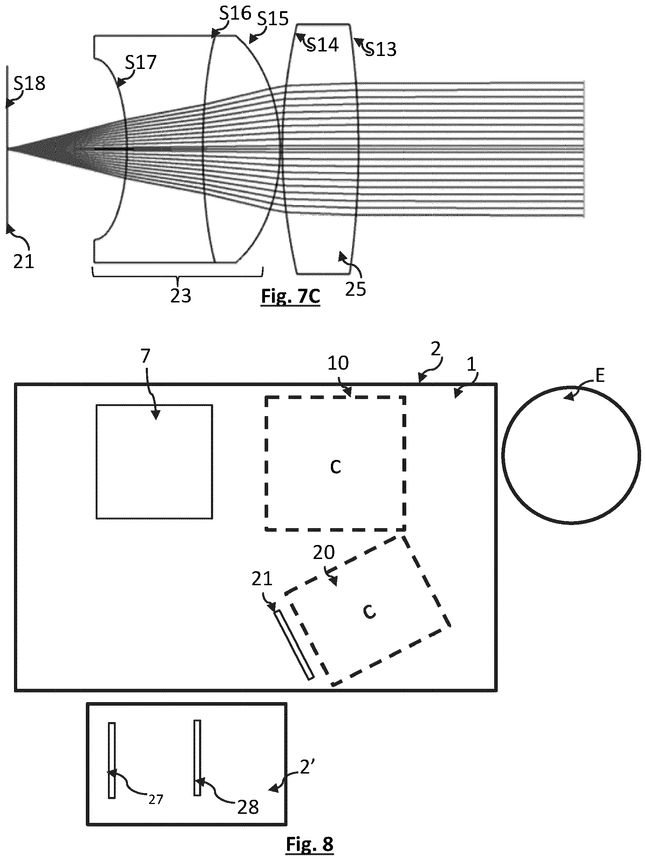

Les figures 7A, 7B et 7C représentent respectivement des schémas de conception de troisième système optique, premier système optique et deuxième système optique. Selon ces schémas de conception, les épaisseurs e1, e2 et e sont respectivement égales à 34 mm, 28 mm, 34 mm

Les tableaux ci-dessous décrivent les principales caractéristiques des dioptres, selon la nomenclature décrite dans Herbert Gross, Handbook of optical systems, volume 4 « Survey of optical instruments », Chapitre 37.15 Eyepiece design Data. Pour chaque surface, le matériau et l'épaisseur correspondent à l'espace entre ladite surface et la surface de rang suivant.

Tableau 1

| Surface (rang) | matériau | Rayon (mm) | Epaisseur (mm) | Excentricité « conic » |
|---|---|---|---|---|
| S1 | air | infini | 18 | |
| S2 | N-BK7 | 148.64 | 4 | -57.26 |
| S3 | air | -37.02 | 10 | -1.13 |
| S4 | miroir | infini | 0 | |
| S5 | S-BSM25 | -34.86 | -5 | |
| S6 | air | 362.5 | -1 | |

(suite)

| Surface (rang) | matériau | Rayon (mm) | Epaisseur (mm) | Excentricité « conic » |
|---|---|---|---|---|
| S7 | SF2 | -14.18 | -5 | |
| S8 | air | -9.69 | 0 | |

Dans le tableau 1, S1 correspond à la première pupille de sortie. Le miroir est incliné à 45°.

Tableau 2

| Surface (rang) | matériau | Rayon (mm) | Epaisseur (mm) | Excentricité « conic » |
|---|---|---|---|---|
| S10 (doublet) | N-BK7 | 13.02 | -4 | -3.17 |
| S11 | SF2 | -19.47 | -4 | -5.85 |
| S12 | air | -129.11 | -12 | 176.15 |

Tableau 3

| Surface (rang) | matériau | Rayon (mm) | Epaisseur (mm) | Excentricité « conic » |
|---|---|---|---|---|
| S13 | S-LAH58 | 68.55 | 6.09 | -5.03 |
| S14 | air | -40.25 | 0.18 | -4.56 |
| S15 | N-BAK1 | 15.31 | 6.17 | 1.07 |
| S16 | S-TIH53 | -50.90 | 6.07 | 17.08 |
| S17 | air | 19.92 | 9.57 | 6.57 |
| S18 | air | infini | 0.0 | 0.0 |

Dans le tableau 3, S18 correspond à l'écran formant la deuxième image.

Le dispositif d'observation 2 peut être différent d'un appareil photographique. Il peut par exemple s'agir d'une lunette, de type longue vue, comme représenté sur la figure 8. La lunette comporte un objectif d'observation 7, permettant d'observer une scène. L'objectif d'observation fait office de moyen de formation d'une première image !1. La lunette comporte un premier système optique, configuré pour projeter l'image de la scène, formant une première image, vers l'oeil. Selon ce mode de réalisation, le dispositif comporte un dispositif annexe 2', séparé du dispositif d'observation et pouvant être à distance de ce dernier. Le dispositif annexe comporte un capteur d'image déporté 27, relié à une unité de transmission 28. L'unité de transmission est configurée pour transmettre l'image acquise par le capteur d'image déporté 27 vers un écran 21. L'écran 21 affiche l'image acquise par le capteur d'image déporté 27, cette dernière étant propagée jusqu'à l'oeil de l'utilisateur par un deuxième système optique 20, comme décrit en lien avec la figure 3.

Selon une possibilité, le dispositif annexe 2' est mobile par rapport au dispositif d'observation 2. Il est par exemple embarqué sur un véhicule, par exemple un drone. Le dispositif d'observation permet un suivi, à distance du drone, tout en visualisant l'image acquise par le capteur d'image annexe embarqué sur le drone. Ainsi, la première image !1 correspond à une image montrant le drone, ce dernier constituant la scène observée par le dispositif d'observation 2. La deuxième image I2 correspond à l'image vue par le capteur d'image embarqué sur le drone. A l'aide du viseur 1, l'utilisateur peut, tout en restant collé au viseur, visualiser les deux images par une simple rotation de l'oeil. Il peut ainsi effectuer une commande du drone, en fonction de la deuxième image, et en surveillant la position du drone sur la première image.

La première image ou la deuxième image peuvent comporter des informations concernant le viseur ou le dispositif, par exemple des paramètres de réglage.

Le viseur précédemment décrit permet d'observer simultanément deux images. Il peut s'agir de deux images représentatives d'une même scène observée, par exemple :

- une image d'une scène, formée à partir de la lumière émise par la scène, et une image de la scène telle que perçue par un capteur d'image ;
- deux images de la même scène avec deux grandissements différents ;
- deux images de la même scène, dans des bandes spectrales différentes ;

- deux images de deux scènes différentes.

Le viseur peut être intégré dans des dispositifs d'observations de type appareil photographique, caméra, microscope, lunette, longue-vue, microscope, arme, périscope, dispositif d'imagerie médicale.

## Revendications

1. Viseur (1), destiné à être présenté face à un oeil (E) d'un utilisateur d'un dispositif d'observation (3), le dispositif d'observation comportant un objectif d'observation (7), destiné à former une image d'une scène observée, le viseur comportant :

   - un moyen de formation (7, 8, 11, 17) d'une première image (I1), représentative de la scène observée ;
   - un premier système optique (10), couplé au moyen de formation de la première image, et agencé pour propager la première image vers une première pupille de sortie ($PS_1$), autour d'un premier axe optique (A1), les rayons lumineux formant la première image atteignant la première pupille de sortie en se propageant autour du premier axe optique ;
   le viseur étant **caractérisé en ce qu'**il comporte :

   - un écran secondaire (21), émettant une deuxième image (I2), différente de la première image ;
   - un deuxième système optique (20), s'étendant entre l'écran (21) et une deuxième pupille de sortie ($PS_2$), autour d'un deuxième axe optique (A2), incliné par rapport au premier axe optique (A1), le deuxième système optique étant configuré pour propager la deuxième image vers la deuxième pupille de sortie ($PS_2$), les rayons lumineux formant la deuxième image atteignant la deuxième pupille de sortie en se propageant autour du deuxième axe optique (A2);

   et **en ce que** :

   - la première pupille de sortie et la deuxième pupille de sortie sont tangentes à une même surface sphérique, dont le diamètre est compris entre 1.5 cm et 3 cm, de façon que le diamètre de surface sphérique correspond au diamètre oculaire ;
   - le premier axe optique et le deuxième axe optique convergent, vers un point de convergence (C), correspondant au centre de ladite surface sphérique, de façon que le point de convergence soit situé dans l'oeil de l'utilisateur de telle sorte l'utilisateur, puisse visualiser

     • la première image lorsque l'oeil est orienté selon le premier axe optique (A1);
     • la deuxième image lorsque l'oeil est orienté selon le deuxième axe optique (A2).

2. Viseur selon la revendication 1, dans lequel le premier axe optique (A1) et le deuxième axe optique (A2) sont coplanaires et s'étendent de préférence dans un plan vertical ou horizontal.

3. Viseur selon l'une quelconque des revendications précédentes, dans lequel :

   - la première image (I1), et la deuxième image (I2) vues respectivement au niveau de la première et de la deuxième pupille de sortie, s'étendent :

     • autour d'un axe longitudinal (X), selon une largeur ($l1$, $l2$);
     • parallèlement à un axe latéral (Y), selon une hauteur ($h1$, $h2$);

   - le deuxième axe (A2) et le premier axe (A1) s'étendent dans un plan parallèle à l'axe latéral (Y), de façon que la première image et la deuxième image sont juxtaposées en étant alignées l'une par rapport à l'autre parallèlement à l'axe latéral ;
   - ou le deuxième axe et le premier axe s'étendent dans un plan parallèle à l'axe longitudinal (X), de façon que la première image et la deuxième image sont juxtaposées en étant alignées l'une par rapport à l'autre parallèlement à l'axe longitudinal.

4. Viseur selon l'une quelconque des revendications précédentes, dans lequel le premier axe optique et le deuxième axe optique sont inclinés l'un par rapport à l'autre selon un angle d'inclinaison (θ) inférieur à 40°.

**5.** Viseur selon l'une quelconque des revendications précédentes, dans lequel :

- l'objectif d'observation (7) forme l'image de la scène observée autour d'un axe optique d'observation (AO)
- le premier axe optique (A1) est parallèle à l'axe optique d'observation (AO).

**6.** Viseur selon l'une quelconque des revendications précédentes, dans lequel :

- le dispositif d'observation est un appareil de prise d'images, comportant un capteur d'image (9), le capteur d'image étant configuré pour acquérir l'image de la scène observée, formée par l'objectif d'observation (7) ;
- l'écran secondaire (21) est relié au capteur d'image (9), de façon que la deuxième image est formée à partir de l'image acquise par le capteur d'image.

**7.** Viseur selon la revendication 6, dans lequel ;

- le moyen de formation de la première image est un séparateur (8), agencé pour être disposé entre l'objectif d'observation (7) et le capteur d'image (9), le séparateur étant orienté de façon à renvoyer l'image de la scène observée, focalisée par l'objectif, vers le premier système optique (10) ;
- le premier système optique (10) s'étend à partir du séparateur (8).

**8.** Viseur selon la revendication 6, dans lequel :

- le moyen de formation de la première image (I1) est un objectif auxiliaire (17), différent de l'objectif d'observation, destiné à former une image de la scène observée;
- le premier système optique (10) s'étend à partir de l'objectif auxiliaire (17).

**9.** Viseur selon la revendication 6, dans lequel :

- le moyen de formation de la première image (I1) est un écran auxiliaire (11), destiné à présenter une image de la scène observée ;
- le premier système optique (10) s'étend à partir de l'écran auxiliaire (11).

**10.** Viseur selon l'une quelconque des revendications 6 à 9, dans lequel l'appareil de prise d'images comporte une unité de commande du capteur d'image (9), et dans lequel le viseur comporte :

- un écran d'affichage (31), relié à l'unité de commande et configuré pour afficher une troisième image (I3);
- un troisième système optique (30), configuré pour propager la troisième image vers le premier système optique.

**11.** Viseur selon l'une quelconque des revendications précédentes, dans lequel le premier système optique (10) s'étend jusqu'à un premier dioptre de sortie (15), le premier dioptre de sortie étant positionné à une distance supérieure ou égale à 15 mm de la première pupille de sortie (PS1).

**12.** Viseur selon l'une quelconque des revendications précédentes, dans lequel le deuxième système optique (20) s'étend jusqu'à un deuxième dioptre de sortie (25), le deuxième dioptre de sortie étant positionné à une distance supérieure ou égale à 15 mm de la deuxième pupille de sortie (PS2).

**13.** Viseur selon l'une quelconque des revendications 1 à 5, dans lequel

- le dispositif d'observation est grandissant, le premier système optique (10) étant confondu avec l'objectif d'observation (7);
- le capteur d'image est disposé sur un dispositif annexe (2'), séparé du dispositif d'observation ;
- l'écran secondaire (21) est configuré pour afficher une image acquise par le capteur d'image, éventuellement après application d'une opération de traitement d'image.

**14.** Dispositif d'observation (2), comportant un objectif d'observation (7), destiné à former une image d'une scène observée, autour d'un axe optique d'observation (AO), le dispositif d'observation comportant un viseur selon l'une quelconque des revendications précédentes.

**15.** Dispositif d'observation selon la revendication 14, le dispositif d'observation étant un appareil photographique comportant un capteur d'image (9), le capteur d'image étant configuré pour acquérir l'image de la scène observée, formée par l'objectif d'observation (7), le dispositif d'observation comportant un viseur selon l'une quelconque des revendications 6 à 12.

16. Dispositif d'observation selon la revendication 14, le dispositif d'observation étant grandissant, le premier système optique (10) étant confondu avec l'objectif d'observation (AO), le dispositif d'observation comportant un viseur selon la revendication 13.

**Patentansprüche**

1. Sucher (1) zur Platzierung gegenüber einem Auge (E) eines Benutzers einer Beobachtungsvorrichtung (3), wobei die Beobachtungsvorrichtung ein Beobachtungsobjektiv (7) aufweist, das dazu bestimmt ist, ein Bild einer beobachteten Szene zu erzeugen, wobei der Sucher Folgendes aufweist:

   - ein Mittel zur Erzeugung (7, 8, 11, 17) eines ersten Bilds (11), das für die beobachtete Szene repräsentativ ist;
   - ein erstes optisches System (10), das an das Mittel zur Erzeugung des ersten Bilds gekoppelt ist und dafür angeordnet ist, das erste Bild zu einer ersten Austrittspupille ($PS_1$) um eine erste optische Achse (A1) hin auszubreiten, wobei die Lichtstrahlen, die das erste Bild erzeugen, die erste Austrittspupille durch Ausbreitung um die erste optische Achse erreichen;
   wobei der Sucher **dadurch gekennzeichnet ist, dass** er Folgendes aufweist:

   - einen Sekundärschirm (21), der ein zweites Bild (I2) aussendet, das sich vom ersten Bild unterscheidet;
   - ein zweites optisches System (20), das sich zwischen dem Schirm (21) und einer zweiten Austrittspupille ($PS_2$) um eine zweite optische Achse (A2) erstreckt, die bezogen auf die erste optische Achse (A1) geneigt ist, wobei das zweite optische System dazu ausgebildet ist, das zweite Bild zur zweiten Austrittspupille ($PS_2$) hin auszubreiten, wobei die Lichtstrahlen, die das zweite Bild erzeugen, die zweite Austrittspupille durch Ausbreitung um die zweite optische Achse (A2) erreichen;

   und dadurch, dass:

   - die erste Austrittspupille und die zweite Austrittspupille zu ein und derselben sphärischen Fläche tangential sind, deren Durchmesser zwischen 1.5 cm und 3 cm beträgt, so dass der Durchmesser der sphärischen Fläche dem Okulardurchmesser entspricht;
   - die erste optische Achse und die zweite optische Achse zu einem Konvergenzpunkt (C) hin zusammenlaufen, der dem Mittelpunkt der sphärischen Fläche entspricht, so dass sich der Konvergenzpunkt im Auge des Benutzers befindet, so dass der Benutzer Folgendes visualisieren kann

      • das erste Bild, wenn das Auge gemäß der ersten optischen Achse (A1) orientiert ist;
      • das zweite Bild, wenn das Auge gemäß der zweiten optischen Achse (A2) orientiert ist.

2. Sucher nach Anspruch 1, wobei die erste optische Achse (A1) und die zweite optische Achse (A2) komplanar sind und sich vorzugsweise in einer vertikalen oder horizontalen Ebene erstrecken.

3. Sucher nach einem der vorhergehenden Ansprüche, wobei:

   - sich das erste Bild (11) und das zweite Bild (I2), jeweils an der ersten und der zweiten Austrittspupille betrachtet, wie folgt erstrecken:

      • um eine Längsachse (X), über eine Breite (*l*1, *l2*);
      • parallel zu einer seitlichen Achse (Y) über eine Höhe (*h*1, *h*2);

   - sich die zweite Achse (A2) und die erste Achse (A1) in einer Ebene parallel zur seitlichen Achse (Y) so erstrecken, dass das erste Bild und das zweite Bild nebeneinander angeordnet sind, wobei sie parallel zur seitlichen Achse bezogen aufeinander ausgerichtet sind;
   - oder sich die zweite Achse und die erste Achse in einer Ebene parallel zur Längsachse (X) so erstrecken, dass das erste Bild und das zweite Bild nebeneinander angeordnet sind, wobei sie parallel zur Längsachse bezogen aufeinander ausgerichtet sind.

4. Sucher nach einem der vorhergehenden Ansprüche, wobei die erste optische Achse und die zweite optische Achse mit einem Neigungswinkel ($\Theta$) kleiner als 40° bezogen aufeinander geneigt sind.

5. Sucher nach einem der vorhergehenden Ansprüche, wobei:

   - das Beobachtungsobjektiv (7) das Bild der beobachteten Szene um eine optische Beobachtungsachse (AO) herum erzeugt
   - die erste optische Achse (A1) parallel zur optischen Beobachtungsachse (AO) verläuft.

6. Sucher nach einem der vorhergehenden Ansprüche, wobei:

   - die Beobachtungsvorrichtung ein Bildaufnahmeapparat mit einem Bildsensor (9) ist, wobei der Bildsensor dazu ausgebildet ist, das Bild der beobachteten Szene zu erfassen, das vom Beobachtungsobjektiv (7) erzeugt wird;
   - der Sekundärschirm (21) so mit dem Bildsensor (9) verbunden ist, dass das zweite Bild anhand des Bilds erzeugt wird, das vom Bildsensor erfasst wird.

7. Sucher nach Anspruch 6, wobei;

   - das Mittel zur Erzeugung des ersten Bilds ein Trennelement (8) ist, das dafür eingerichtet ist, zwischen dem Beobachtungsobjektiv (7) und dem Bildsensor (9) angeordnet zu sein, wobei das Trennelement so orientiert ist, dass es das Bild der beobachteten Szene, das vom Objektiv fokussiert ist, zum ersten optischen System (10) zurückwirft;
   - sich das erste optische System (10) ausgehend von dem Trennelement (8) erstreckt.

8. Sucher nach Anspruch 6, wobei:

   - das Mittel zur Erzeugung des ersten Bilds (11) ein Hilfsobjektiv (17) ist, das sich von dem Beobachtungsobjektiv unterscheidet, das dazu bestimmt ist, ein Bild der beobachteten Szene zu erzeugen;
   - sich das erste optische System (10) ausgehend von dem Hilfsobjektiv (17) erstreckt.

9. Sucher nach Anspruch 6, wobei:

   - das Mittel zur Erzeugung des ersten Bilds (11) ein Hilfsschirm (11) ist, der dazu bestimmt ist, ein Bild der beobachteten Szene darzustellen;
   - sich das erste optische System (10) ausgehend von dem Hilfsschirm (11) erstreckt.

10. Sucher nach einem der Ansprüche 6 bis 9, wobei der Bildaufnahmeapparat eine Steuereinheit des Bildsensors (9) aufweist und wobei der Sucher Folgendes aufweist:

   - einen Anzeigeschirm (31), der mit der Steuereinheit verbunden ist und dazu ausgebildet ist, ein drittes Bild (I3) anzuzeigen;
   - ein drittes optisches System (30), das dazu ausgebildet ist, das dritte Bild zum ersten optischen System hin auszubreiten.

11. Sucher nach einem der vorhergehenden Ansprüche, wobei sich das erste optische System (10) bis zu einem ersten Austrittsdiopter (15) erstreckt, wobei der erste Austrittsdiopter in einem Abstand größer als oder gleich 15 mm von der ersten Austrittspupille (PS1) positioniert ist.

12. Sucher nach einem der vorhergehenden Ansprüche, wobei sich das zweite optische System (20) bis zu einem zweiten Austrittsdiopter (25) erstreckt, wobei der zweite Austrittsdiopter in einem Abstand größer als oder gleich 15 mm von der zweiten Austrittspupille (PS2) positioniert ist.

13. Sucher nach einem der Ansprüche 1 bis 5, wobei

   - die Beobachtungsvorrichtung vergrößernd ist, wobei das erste optische System (10) mit dem Beobachtungsobjektiv (7) zusammenfällt;
   - der Bildsensor auf einer Nebenvorrichtung (2') angeordnet ist, die von der Beobachtungsvorrichtung getrennt ist;
- der Sekundärschirm (21) dazu ausgebildet ist, ein Bild anzuzeigen, das vom Bildsensor erfasst wird, eventuell nach Anwendung eines Bildbearbeitungsvorgangs.

14. Beobachtungsvorrichtung (2) mit einem Beobachtungsobjektiv (7), das dazu bestimmt ist, ein Bild einer beobachteten Szene um eine optische Beobachtungsachse (AO) herum zu erzeugen, wobei die Beobachtungsvorrichtung einen Sucher nach einem der vorhergehenden Ansprüche aufweist.

15. Beobachtungsvorrichtung nach Anspruch 14, wobei die Beobachtungsvorrichtung ein Fotoapparat mit einem Bildsensor (9) ist, wobei der Bildsensor dazu ausgebildet ist, das Bild der beobachteten Szene zu erfassen, das vom Beobachtungsobjektiv (7) erzeugt wird, wobei die Beobachtungsvorrichtung einen Sucher nach einem der Ansprüche 6 bis 12 aufweist.

16. Beobachtungsvorrichtung nach Anspruch 14, wobei die Beobachtungsvorrichtung vergrößernd ist, wobei das erste optische System (10) mit dem Beobachtungsobjektiv (AO) zusammenfällt, wobei die Beobachtungsvorrichtung einen Sucher nach Anspruch 13 aufweist.

## Claims

1. A viewfinder (1), configured to be placed facing an eye (E) of a user of an observing device (3), the observing device comprising an observation objective intended to form an image of an observed scene, the viewfinder comprising:

   - a means (7,8,11,17) for forming a first image (11), representative of the observed scene;
   - a first optical system (10), coupled to the means for forming the first image, and arranged to propagate the first image to a first exit pupil (PS$_1$), about a first optical axis (A1), the light rays forming the first image reaching the first exit pupil by propagating about the first optical axis;
   wherein the viewfinder comprises:

       - a secondary display (21), emitting a second image (I2), different from the first image;
       - a second optical system (20), lying between the display (21) and a second exit pupil (PS$_2$), about a second optical axis (A2), inclined with respect to the first optical axis (A1), the second optical system being configured to propagate the second image to the second exit pupil (PS$_2$), the light rays forming the second image reaching the second exit pupil by propagating about the second optical axis (A2);

   and wherein:

       - the first exit pupil and the second exit pupil are tangent to the same spherical surface, the diameter of which is comprised between 1.5 cm and 3 cm, so that the spherical-surface diameter corresponds to the ocular diameter;
       - the first optical axis and the second optical axis converge, to a point of convergence, corresponding to the centre of said spherical surface, so that the point of convergence (C) is located in the eye of the user such that the user may view

           • the first image when the eye is oriented along the first optical axis (A1);
           • the second image when the eye is oriented along the second optical axis. (A2)

2. The viewfinder according to Claim 1, wherein the first optical axis (A1) and the second optical axis (A2) are coplanar and preferably lie in a vertical or horizontal plane.

3. The viewfinder according to any one of the preceding claims, wherein:

   - the first image (11) and the second image (I2), viewed respectively at the first and at the second exit pupil, extend:

       • about a longitudinal axis (X), defining a width ($l1$, $l2$);
       • parallel to a lateral axis (Y), defining a height ($h1$, $h2$);

   - the second axis (A2) and the first axis (A1) lie in a plane parallel to the lateral axis (Y), so that the first image and the second image are juxtaposed while being aligned with respect to each other parallel to the lateral axis;
- or the second axis and the first axis lie in a plane parallel to the longitudinal axis (X), so that the first image and the second image are juxtaposed while being aligned with respect to each other parallel to the longitudinal axis.

4. The viewfinder according to any one of the preceding claims, wherein the first optical axis and the second optical axis are inclined with respect to each other by an angle of inclination (θ) smaller than 40°.

5. The viewfinder according to any one of the preceding claims, wherein:

- the observation objective (7) forms the image of the observed scene about an optical axis of observation (AO);
- the first optical axis (A1) is parallel to the optical axis of observation (AO).

6. The viewfinder according to any one of the preceding claims, wherein:

- the observing device is an image-capturing apparatus, comprising an image sensor (9), the image sensor being configured to acquire the image of the observed scene, formed by the observation objective (7);
- the secondary display (21) is connected to the image sensor (9), so that the second image is formed from the image acquired by the image sensor.

7. The viewfinder according to Claim 6, wherein:

- the means for forming the first image is a splitter (8), arranged to be placed between the observation objective (7) and the image sensor (9), the splitter being oriented so as to steer the image of the observed scene, focused by the objective, towards the first optical system (10);
- the first optical system (10) extends from the splitter (8).

8. The viewfinder according to Claim 6, wherein:

- the means for forming the first image (11) is an auxiliary objective (17), different from the observation objective, intended to form an image of the observed scene;
- the first optical system (10) extends from the auxiliary objective (17).

9. The viewfinder according to Claim 6, wherein:

- the means for forming the first image (11) is an auxiliary display (11), intended to display an image of the observed scene;
- the first optical system (10) extends from the auxiliary display (11).

10. The viewfinder according to any one of claims 6 to 9, wherein the image-capturing apparatus comprises a unit for controlling the image sensor (9), and wherein the viewfinder comprises:

- a display (31), connected to the control unit and configured to display a third image (I3);
- a third optical system (30), configured to propagate the third image to the first optical system.

11. The viewfinder according to any one of the preceding claims, wherein the first optical system (10) extends to a first exit dioptric interface (15), the first exit dioptric interface being positioned at a distance larger than or equal to 15 mm from the first exit pupil (PS1).

12. The viewfinder according to any one of the preceding claims, wherein the second optical system (20) extends to a second exit dioptric interface (25), the second exit dioptric interface being positioned at a distance larger than or equal to 15 mm from the second exit pupil (PS2).

13. The viewfinder according to any one of Claims 1 to 5, wherein

- the observing device is magnifying, the first optical system (10) and the observing objective (7) being one and the same;
- the image sensor is placed on a peripheral device (2'), separate from the observing device;

- the secondary display (21) is configured to display an image acquired by the image sensor, optionally after application of an image-processing operation.

14. An observing device (2), comprising an observation objective (7), intended to form an image of an observed scene, about an optical axis of observation (AO), the observing device comprising the viewfinder according to any one of the preceding claims.

15. The observing device according to Claim 14, the observing device being a camera comprising an image sensor (9), the image sensor being configured to acquire the image of the observed scene, formed by the observation objective (7), the observing device comprising the viewfinder according to any one of Claims 6 to 12.

16. The observing device according to Claim 14, the observing device being magnifying, the first optical system (10) and the observation objective (AO) being one and the same, the observing device comprising the viewfinder according to Claim 13.

**Fig. 1A**

**Fig. 1B**

**Fig. 1C**

**EP 4 202 544 B1**

**Fig. 1D**

**Fig. 2A**

**Fig. 2B**

**Fig. 2C**

20

23

21

A2

C

25

**Fig. 3**

9

2

31

30

33

A3

CC

10

17

13

A1

35

15

7

9

AO

2

**Fig. 4A**

I1,I3

$l1$

h1

$l2$

h2

I2

**Fig. 4B**

31

30

33

A3

20

23

A2

21

25

35

C

9

**Fig. 5**

**Fig. 6**

**Fig. 7A**

**Fig. 7B**

**Fig. 7C**

**Fig. 8**

**EP 4 202 544 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003123114 A1